# EUROPEAN PATENT APPLICATION

(11) **EP 4 618 112 A1**
(43) Date of publication of application: **17.09.2025**
(21) Application number: 23888461.3
(22) Date of filing: 19.10.2023
(51) Int. Cl.: H01B 13/00, C01B 25/14, H01M 4/62, H01M 10/0562

(54) **SULFIDE SOLID ELECTROLYTE MANUFACTURING METHOD**

(30) Priority: 07.11.2022 JP 2022178441
(71) Applicant: AGC INC., Chiyoda-ku, Tokyo 1008405 (JP)
(72) Inventor: AKATSUKA Kosho, Tokyo 100-8405 (JP); FUJII Naoki, Tokyo 100-8405 (JP)
(74) Representative: Müller-Boré & Partner Patentanwälte PartG mbB
(86) International application number: PCT/JP2023/037944
(87) International publication number: WO 2024/101110

(57) **Abstract**

The present invention pertains to a sulfide solid electrolyte manufacturing method involving: mixing a raw material containing Li elements, a raw material containing P elements, and a raw material containing S elements, to obtain a raw material mixture; and performing a heat treatment on the raw material mixture. As the raw material containing S elements, Li₂Sₓ (0.05≤x≤0.95) is used. The heat treatment is performed by introducing a gas containing S elements. The cumulative introduction amount Y (mass%) of S elements in the gas containing S elements, with respect to the mass of the raw material mixture, satisfies the relationship Y≥x²-6.5x+5.8, with x being in said Li₂Sₓ.

## Description

### TECHNICAL FIELD

The present invention relates to a method for producing a sulfide solid electrolyte.

### BACKGROUND ART

Lithium ion secondary batteries are widely used in portable electronic devices such as mobile phones and notebook computers.

In the related art, a liquid electrolyte has been used in a lithium ion secondary battery, but there is a concern of liquid leakage, ignition, and the like, and it is necessary to increase the size of a case for safety design. It has also been desired to improve the shortage of battery life and the narrow operating temperature range.

In contrast, attention has been paid to an all-solid-state lithium secondary battery in which a solid electrolyte is used as an electrolyte of a lithium ion secondary battery, from the viewpoint of improving safety, charging and discharging at a high speed, and reducing the size of the case.

The solid electrolytes are roughly classified into sulfide solid electrolytes and oxide solid electrolytes. Sulfide ions constituting the sulfide solid electrolytes have higher polarizability and higher ion conductivity than those of oxide ions constituting the oxide solid electrolytes. As the sulfide solid electrolytes, there has been known LGPS crystals such as Li₁₀GeP₂S₁₂, argyrodite crystals such as Li₆PS₅Cl, LPS crystallized glass such as Li₇P₃S₁₁ crystallized glass, and the like.

Lithium sulfide, which is a raw material of the sulfide solid electrolyte, is originally present as L₂S, but when lithium sulfide is stored for about half a year in dry air or nitrogen atmosphere at room temperature and at a dew point of about -60°C to -40°C, sulfur is naturally deficient, and a value of x when lithium sulfide is represented by L₂Sₓ is less than 1.

When an attempt is made to produce a sulfide solid electrolyte using such a sulfur-deficient lithium sulfide as a raw material, crystals constituting the sulfide solid electrolyte are also in a sulfur-deficient state, and lithium-ion conductivity decreases.

On the other hand, when high-quality L₂S is used with high purity to achieve high lithium-ion conductivity, a cost will increase because sulfide compounds are expensive.

On the other hand, Non Patent Literature 1 discloses that a solution synthesis method is adopted, and sulfur (S₈) is added to stabilize Li₂S, thereby obtaining a sulfide solid electrolyte in which a deficiency of S atom is prevented.

### CITATION LIST

### NON-PATENT LITERATURE

Non Patent Literature 1: M-J Kim et al., A Novel Strategy to Overcome the Hurdle for Commercial All-Solid-State Batteries via Low-Cost Synthesis of Sulfide Solid Electrolytes, Small Methods, 2021, 5, 2100793

### SUMMARY OF INVENTION

### TECHNICAL PROBLEM

However, a method described in Non Patent Literature 1 is based on a solution synthesis, and a synthesis time required for a solution synthesis and drying step is long, and further improvement is desired from the viewpoint of a cost.

Therefore, an object of the present invention is to provide a production method capable of obtaining a sulfide solid electrolyte exhibiting high lithium-ion conductivity in a short period of time even when low-quality lithium sulfide having deficient S atom is used as a raw material.

### SOLUTION TO PROBLEM

As a result of intensive studies, the present inventors have found that, in a method for producing a sulfide solid electrolyte by sintering a raw material by heating, or melting a raw material by heating and cooling the raw material, the above problems can be solved by introducing a gas containing an S element having a cumulative introduction amount of S element within a specific range during the heating, and have completed the present invention.

That is, the present invention relates to the following [1] to [9].
[1] A method for producing a sulfide solid electrolyte, the method including:
   mixing a raw material containing a Li element, a raw material containing a P element, and a raw material containing an S element to obtain a raw material mixture; and
   heat-treating the raw material mixture,
   in which Li₂Sₓ (0.05 ≤ × ≤ 0.95) is used as the raw material containing the S element,
   the heating treatment is performed while introducing a gas containing an S element, and
   a cumulative introduction amount Y (mass%) of the S element in the gas containing the S element with respect to a mass of the raw material mixture satisfies a relationship of Y ≥ x² - 6.5x + 5.8 with respect to the x in the Li₂Sₓ.
[2] The method for producing a sulfide solid electrolyte according to [1], further including:
   obtaining a melt of the raw material mixture by the heating treatment; and
   cooling the melt to precipitate a crystal.
[3] The method for producing a sulfide solid electrolyte according to [1], in which a crystal is precipitated by the heating treatment.
[4] The method for producing a sulfide solid electrolyte according to any one of [1] to [3],
   in which the raw material mixture further includes a raw material containing a Ha element,
   the Ha element is at least one element selected from the group consisting of F, Cl, Br, and I, and
   the sulfide solid electrolyte has an argyrodite crystal structure.
[5] The method for producing a sulfide solid electrolyte according to [4], in which a lattice constant of the argyrodite crystal structure is 9.70 Å to 10.50 Å.
[6] The method for producing a sulfide solid electrolyte according to any one of [1] to [5], in which the x in the Li₂Sₓ is 0.05 ≤ × ≤ 0.90.
[7] The method for producing a sulfide solid electrolyte according to any one of [1] to [6], in which the gas containing the S element includes a sulfur gas.
[8] The method for producing a sulfide solid electrolyte according to any one of [1] to [7], in which the cumulative introduction amount Y of the S element in the gas containing the S element is 2 mass% or more.
[9] The method for producing a sulfide solid electrolyte according to any one of [1] to [8], in which the sulfide solid electrolyte has lithium-ion conductivity of 2 mS/cm or more.

### ADVANTAGEOUS EFFECTS OF INVENTION

According to the present invention, even when low-quality lithium sulfide having deficient S atom is used as a raw material, a sulfide solid electrolyte exhibiting high lithium-ion conductivity can be obtained in a short time. Therefore, a high-quality sulfide solid electrolyte can be obtained at a low cost. A production cost of an all-solid-state lithium secondary battery including the sulfide solid electrolyte can also be reduced.

### BRIEF DESCRIPTION OF DRAWINGS

FIG. 1 is a flow diagram illustrating a method for producing a sulfide solid electrolyte according to the present embodiment.
FIG. 2 is a flow diagram illustrating a method for producing a sulfide solid electrolyte according to the present embodiment.
FIG. 3 is a flow diagram illustrating a method for producing a sulfide solid electrolyte according to the present embodiment.
FIG. 4 is an XRD pattern of a sulfide solid electrolyte in Example 1.
FIG. 5 is an XRD pattern of a sulfide solid electrolyte in Example 2.
FIG. 6 is an XRD pattern of a sulfide solid electrolyte in Example 3.
FIG. 7 is an XRD pattern of a sulfide solid electrolyte in Example 4.
FIG. 8 is an XRD pattern of a sulfide solid electrolyte in Example 5.
FIG. 9 is an XRD pattern of a sulfide solid electrolyte in Example 6.
FIG. 10 is a graph showing a quadratic function curve representing Y = x² - 6.5x + 5.8, a quadratic function curve representing Y = x² - 6.5x + 6.2, and plots of Examples and Comparative Examples with respect to a cumulative introduction amount Y (mass%) of an S element in a gas containing the S element with respect to a mass of a raw material mixture and a value of x in Li₂Sₓ which is a raw material containing an S element.

### DESCRIPTION OF EMBODIMENTS

Hereinafter, the present invention is described in detail, but the present invention is not limited to the following embodiment and can be freely modified and implemented without departing from the gist of the present invention. In addition, the symbol "-" or the word "to" that is used to express a numerical range includes the numerical values before and after the symbol or the word as the upper limit value and the lower limit value of the range, respectively.

In the present specification, "mass" has the same meaning as "weight", and "mass%" has the same meaning as "weight%".

### <Method for Producing Sulfide Solid Electrolyte>

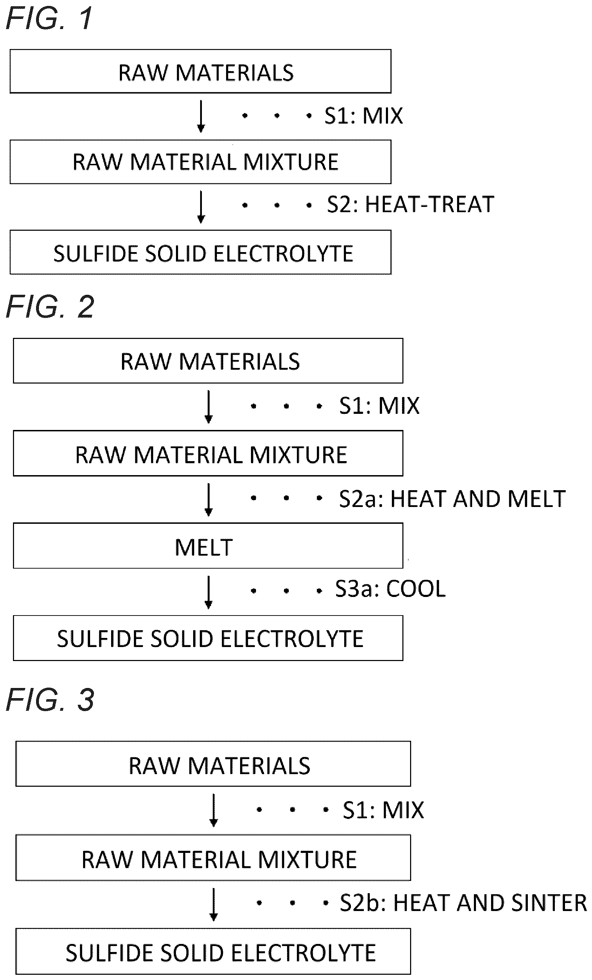

As shown in FIG. 1, a method for producing a sulfide solid electrolyte according to the present embodiment includes the following step S1 and step S2 in order.

Step S1 is a step of mixing a raw material containing a Li element, a raw material containing a P element, and a raw material containing an S element to obtain a raw material mixture.

Step S2 is a step of heat-treating the raw material mixture obtained in step S1.

As shown in FIG. 2, step S2 may be step S2a of performing heating and melting as the heating treatment to obtain a melt of the raw material mixture obtained in step S1. In that case, the sulfide solid electrolyte in the present embodiment is obtained by further including a step S3a of cooling the melt and precipitating crystals.

As shown in FIG. 3, step S2 may be step S2b of obtaining a sintered body of the raw material mixture obtained in step S1 by the heating treatment, and such a sintered body is the sulfide solid electrolyte in the present embodiment.

Each step is described.

### -Step S1

In step S1, the raw material mixture is obtained by mixing the raw material containing the Li element, the raw material containing the P element, and the raw material containing the S element.

In the case of obtaining a sulfide solid electrolyte containing an argyrodite crystal structure, the raw materials include a raw material containing a Ha element in addition to the raw material containing the Li element, the raw material containing the P element, and the raw material containing the S element. In the present specification, Ha element is at least one element selected from the group consisting of F, Cl, Br, and I.

A raw material containing another element may be contained in accordance with a desired composition of the sulfide solid electrolyte. "In accordance with the composition of the sulfide solid electrolyte" means that, for example, when a part of the Li element, P element, S element, and the like is replaced with another element, a raw material containing the replaced other element may also be contained.

Examples of the other element include Si element, Al element, Sn element, In element, Cu element, Sb element, Ge element, and O element.

Among the raw materials, lithium sulfide represented by Li₂Sₓ (0.05 ≤ × ≤ 0.95) is used as the raw material containing the S element. This lithium sulfide is lithium sulfide in which the S element is partially deficient and a value of x is 0.95 or less with respect to lithium sulfide represented by Li₂S in which x = 1.

The value of x of lithium sulfide represented by Li₂Sₓ may be 0.05 to 0.95, preferably 0.10 to 0.93, and more preferably 0.20 to 0.90. Here, the value of x is preferably 0.93 or less, and more preferably 0.90 or less, from the viewpoint of reducing a cost of the raw materials. The value of x is preferably 0.10 or more, and more preferably 0.20 or more, from the viewpoint of increasing efficiency of compensating for S deficiency.

In addition to using Li₂Sₓ as the raw material containing the S element, known raw materials in the related art can be used as the raw material containing the Li element and the raw material containing the P element, and as the raw material containing the Ha element and the raw material containing the other element if desired. A raw material containing an S element other than Li₂Sₓ may be used in combination.

Specifically, elemental Li or a compound containing Li, elemental P or a compound containing P, a compound containing S if desired, and a compound containing Ha if desired can be appropriately combined and used. When an O element is further contained, an oxide may be used as the compound.

These compounds may be a compound containing two or more of Li, P, S, and Ha.

For example, Li₂Sₓ, which is the raw material containing the S element, is a compound serving as both the raw material containing the S element and the raw material containing the Li element. This does not exclude a use of compounds other than Li₂Sₓ as the raw material containing the Li element, and furthermore, elemental Li or other compounds containing Li may be used in combination.

Other examples include phosphorus pentasulfide (P₂S₅) as a compound serving as both the raw material containing the P element and the raw material containing the S element. Examples of a compound serving as both the raw material containing the Li element and the raw material containing the Ha element include lithium halide.

As the compound containing Li, Li₂Sₓ is used as described above, but in addition to this, a lithium compound such as lithium carbonate (Li₂CO₃), lithium sulfate (Li₂SO₄), lithium oxide (Li₂O), lithium hydroxide (LiOH), or lithium halide (LiHa) may be used. These may be used alone or in combination of two or more kinds thereof.

As the compound containing S, Li₂Sₓ is used as described above, but in addition to this, phosphorus sulfides such as phosphorus trisulfide (P₂S₃) and phosphorus pentasulfide (P₂S₅), other sulfur compounds containing phosphorus, and a compound containing sulfur may be used in combination. Examples of the compound containing sulfur include H₂S, CS₂, iron sulfides (such as FeS, Fe₂S₃, FeS₂, Fe₁₋ₓS), bismuth sulfide (Bi₂S₃), and copper sulfides (such as CuS, Cu₂S, Cu₁₋ₓS). When the compound containing S other than Li₂Sₓ is used, phosphorus sulfides are preferred, and phosphorus pentasulfide (P₂S₅) is more preferred, from the viewpoint of preventing the inclusion of elements other than the elements constituting the target sulfide solid electrolyte. These may be used alone or in combination of two or more kinds thereof. Phosphorus sulfides are compounds serving as both the compound containing S and the compound containing P.

Examples of the compound containing P include phosphorus sulfides such as phosphorus trisulfide (P₂S₃) and phosphorus pentasulfide (P₂S₅), and phosphorus compounds such as sodium phosphate (Na₃PO₄). Among them, phosphorus sulfides are preferred, and phosphorus pentasulfide (P₂S₅) is more preferred, from the viewpoint of preventing the inclusion of elements other than the elements constituting the target sulfide solid electrolyte. These may be used alone or in combination of two or more kinds thereof.

Examples of the compound containing Ha include lithium halides (LiHa) such as lithium fluoride (LiF), lithium chloride (LiCl), lithium bromide (LiBr), and lithium iodide (LiI), phosphorus halides, phosphoryl halides, sulfur halides, sodium halides, and boron halides. Among them, lithium halides are preferable, LiCl, LiBr, and LiI are more preferable, and LiCl and LiBr are still more preferable, from the viewpoint of preventing the inclusion of elements other than the elements constituting the target sulfide solid electrolyte. These compounds may be used alone or in combination of two or more kinds thereof.

Examples of the raw material containing the Si element as an optional component include SiO₂ and SiS₂. Among them, SiO₂ is more preferred from the viewpoint of lithium-ion conductivity. These compounds may be used alone or in combination of two or more kinds thereof.

Examples of a raw material containing the Al element as an optional component include Al₂S₃, Al₂O₃, and AlCl₃. Among them, Al₂S₃ and AlCl₃ are preferred, and Al₂S₃ is more preferred, from the viewpoint of the lithium-ion conductivity. These compounds may be used alone or in combination of two or more kinds thereof.

Examples of a raw material containing the Sn element as an optional component include SnS, SnS₂, SnO, SnO₂, and SnCl₂. Among them, from the viewpoint of lithium-ion conductivity, SnS₂ and SnCl₂ are preferred, and SnS₂ is more preferred. These compounds may be used alone or in combination of two or more kinds thereof.

Examples of a raw material containing the In element as an optional component include In₂O₃, In₂S₃, and InCl₃. Among them, from the viewpoint of the lithium-ion conductivity, In₂S₃ and InCl₃ are preferred, and In₂S₃ is more preferred. These compounds may be used alone or in combination of two or more kinds thereof.

Examples of a raw material containing the Cu element as an optional component include Cu₂O, CuO, Cu₂S, CuS, and CuCl₂. Among them, from the viewpoint of the lithium-ion conductivity, CuS and CuCl₂ are preferred, and CuS is more preferred. These compounds may be used alone or in combination of two or more kinds thereof.

Examples of the raw material containing the Sb element as an optional component include Sb₂O₃, Sb₂S₃, and SbCl₃. Among them, from the viewpoint of lithium-ion conductivity, Sb₂S₃ and SbCl₃ are preferred, and Sb₂S₃ is more preferred. These compounds may be used alone or in combination of two or more kinds thereof.

Examples of a raw material containing the Ge element as an optional component include GeO₂, GeS, GeS₂, and GeCl₂. Among them, from the viewpoint of the lithium-ion conductivity, GeS₂ and GeCl₂ are preferred, and GeS₂ is more preferred. These compounds may be used alone or in combination of two or more kinds thereof.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

In particular, when the sulfide solid electrolyte is obtained by heating and sintering in step S2b to be described later, it is preferable that the raw materials are made amorphous by mixing in step S1 to form a precursor of the sulfide solid electrolyte. In this case, the raw materials are preferably mixed using a medium, and among them, a planetary ball mill, an attritor (registered trademark), or a bead mill having a higher mixing force or pulverizing force is more preferable.

### -Step S2

In step S2, the raw material mixture obtained in step S1 is heat-treated. In step S2, the melt may be obtained by heating and melting as step S2a, and the sulfide solid electrolyte may be obtained by the heating and sintering as step S2b, but in either case, the heating treatment is performed while introducing a gas containing an S element. Among the above, from the viewpoint of obtaining a desired sulfide solid electrolyte in a shorter time, it is preferable to adopt a method of obtaining the melt by the heating and melting as step S2a.

A cumulative introduction amount Y (mass%) of the S element in the gas containing the S element with respect to a mass of the raw material mixture satisfies a relationship of Y ≥ x² - 6.5x + 5.8, with respect to x in Li₂Sₓ which is the raw material containing the S element.

The present inventors have found that, even when a heating and melting method or a solid phase synthesis method is used instead of a solution synthesis method as disclosed in Non Patent Literature 1, a sulfide solid electrolyte having excellent lithium-ion conductivity in which a deficiency of S atom is prevented can be obtained in a short time by performing a heating treatment while introducing a gas containing an S element such that the cumulative introduction amount Y of the S element with respect to the mass of the raw material mixture satisfies the above relational expression.

An appropriate range of the cumulative introduction amount Y (mass%) of the S element in the gas containing the S element with respect to the mass of the raw material mixture varies depending on a degree of deficiency of the S atom in lithium sulfide L₂Sₓ as the raw material. Therefore, the present inventors have derived the above relational expression from results of the degree of deficiency of the S atom in lithium sulfide L₂Sₓ, the cumulative introduction amount Y of the S element in the gas containing the S element with respect to the mass of the raw material mixture, and the lithium-ion conductivity of the obtained sulfide solid electrolyte. Here, since the S element is introduced by the gas, it is considered that it is appropriate to express a relationship between the value of x and the cumulative introduction amount Y (mass%) by a quadratic function from the viewpoint of a vapor pressure and liquid-vapor equilibrium. Each coefficient of the above relational expression is determined based on actual evaluation results.

In addition to the above relational expression, the cumulative introduction amount Y (mass%) of the S element in the gas containing the S element with respect to the mass of the raw material mixture and the value of x in Li₂Sₓ which is the raw material containing the S element preferably satisfy a relationship of Y ≥ x² - 6.5x + 6.2. Similarly to the relational expression of Y ≥ x² - 6.5x + 5.8, the coefficients are determined based on the actual evaluation results.

The cumulative introduction amount Y (mass%) of the S element in the gas containing the S element with respect to the mass of the raw material mixture and the value of x in Li₂Sₓ which is the raw material containing the S element preferably satisfy a relationship of Y ≤ x² - 6.5x + 16.5, and more preferably satisfy a relationship of Y ≤ x² - 6.5x + 12.5. In the above formula, each coefficient is determined based on the actual evaluation results and from the viewpoint of lowering the lithium-ion conductivity caused by generation of impurities.

That is, the value of x in L₂Sₓ is 0.05 to 0.95, and for example, when x is 0.90, the cumulative introduction amount Y of the S element in the gas containing the S element with respect to the mass of the raw material mixture is 0.76 mass% or more, and is more preferably 1.16 mass% or more from the viewpoint of further preventing the deficiency of the S atom. The cumulative introduction amount Y is preferably 11.46 mass% or less and more preferably 7.46 mass% or less from the viewpoint of lowering the lithium-ion conductivity caused by the generation of the impurities.

When x is 0.50, the cumulative introduction amount Y of the S element in the gas containing the S element with respect to the mass of the raw material mixture is 2.80 mass% or more, and is more preferably 3.20 mass% or more from the viewpoint of further preventing the deficiency of the S atom. The cumulative introduction amount Y is preferably 13.50 mass% or less and more preferably 9.50 mass% or less from the viewpoint of lowering the lithium-ion conductivity caused by the generation of the impurities.

When x is 0.30, the cumulative introduction amount Y of the S element in the gas containing the S element with respect to the mass of the raw material mixture is 3.94 mass% or more, and is more preferably 4.34 mass% or more from the viewpoint of further preventing the deficiency of the S atom. The cumulative introduction amount Y is preferably 14.64 mass% or less and more preferably 10.64 mass% or less from the viewpoint of lowering the lithium-ion conductivity caused by the generation of the impurities. However, the value of x is not limited to the above, and may be in a range of 0.05 to 0.95.

Examples of an S element source in the gas containing the S element include a sulfur gas, a hydrogen sulfide gas, and a sulfur dioxide gas, and it is preferable to contain a sulfur gas from the viewpoint of reactivity with the raw material.

The gas containing the S element may be introduced by adding an elemental sulfur powder and vaporizing the elemental sulfur powder by the heating during the heating treatment. The elemental sulfur powder may be added together with the raw materials when the raw materials are mixed to obtain the raw material mixture, or may be separately added after the raw material mixture is obtained. However, when the elemental sulfur powder is added together with the raw materials when the raw material mixture is obtained, a mass of the elemental sulfur powder is not included in the mass of the obtained raw material mixture.

As the gas containing the S element, the sulfur gas, the hydrogen sulfide gas, the sulfur dioxide gas, or the like may be introduced, and the gas containing the S element obtained by adding the elemental sulfur powder may be introduced together.

As the gas containing the S element, a gas serving as the S element source may be used as a mixed gas with, for example, an inert gas. A mixing ratio with the inert gas is free, and is not particularly limited as long as the cumulative introduction amount Y of the S element with respect to the mass of the raw material mixture can be a desired value.

For example, when an amount of the raw material mixture obtained by mixing the raw materials is 100 g, the gas containing the S element having a sulfur content of Y g is introduced. At this time, the gas containing the S element is introduced in a predetermined amount such that the cumulative introduction amount of the S element with respect to the mass of the raw material mixture becomes a desired value, rather than a concentration of the S element in the mixed gas or a concentration of the S element in a container in which the heating treatment is performed.

Examples of the inert gas include a nitrogen gas, an argon gas, and a helium gas, which may be used alone or in combination of two or more kinds thereof.

When the heating treatment in step S2 is the heating and melting of step S2a, a specific method for heating and melting the raw material mixture is not particularly limited. For example, when the raw material is placed in a heat-resistant container and heated in a heating furnace, the heating and melting may be performed while the gas containing the S element is introduced into the heating furnace, or the gas containing the S element may be introduced into the heating furnace after the melt is obtained. When the raw material mixture is sealed and melted in the heat-resistant container, the sealing is performed in a gas atmosphere containing an S element or in a state where the elemental sulfur powder is added, so that the gas containing the S element is introduced.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above-described material, or may be a container having a layer of carbon, an oxide, a nitride, a carbide, or the like, such as a carbon-coated quartz tube.

A heating temperature when the raw material mixture is heated and melted varies depending on the raw materials to be used and the composition of the raw material mixture, but is, for example, preferably 550°C to 950°C, more preferably 600°C to 900°C, still more preferably 650°C to 850°C, and particularly preferably 650°C to 800°C. Here, the heating temperature is preferably 550°C or higher, more preferably 600°C or higher, and still more preferably 650°C or higher from the viewpoint of melting the raw materials and introducing the gas containing the S element. The heating temperature is preferably 950°C or lower, more preferably 900°C or lower, still more preferably 850°C or lower, and particularly preferably 800°C or lower, from the viewpoint of preventing a composition deviation caused by volatilization of the components.

A time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. From the viewpoint of productivity, the time for the heating and melting is preferably 10 hours or less, more preferably 9.5 hours or less, and still more preferably 9 hours or less. Although the gas containing the S element is introduced, a length of the time may be adjusted in accordance with a concentration of the S element in the atmosphere during the heating treatment. That is, when the gas containing the S element is introduced as the mixed gas with the inert gas or the like, and when an amount of the inert gas is large and the concentration of the S element in the mixed gas is relatively low, a melting time may be set to be long. When the amount of the inert gas is small and the concentration of the S element in the mixed gas is relatively high, the melting time may be set to be short.

A dew point during the heating and melting is preferably -20°C or lower, and a lower limit thereof is not particularly limited, but is usually about -80°C. An oxygen concentration is preferably 1000 ppm or less.

In step S2a, whether the melt is completely dissolved can be checked by the absence of a peak derived from a crystal in high-temperature X-ray diffraction measurement.

When the heating treatment in step S2 is the heating and sintering of step S2b, a specific method of the heating and sintering of the raw material mixture is not particularly limited. For example, when the raw materials are placed in the heat-resistant container and heated in the heating furnace, the heating sintering is performed while the gas containing the S element is introduced into the heating furnace. When the raw material mixture is sealed and heated and sintered in the heat-resistant container, the sealing is performed in the gas atmosphere containing the S element or in a state where the elemental sulfur powder is added, so that the gas containing the S element is introduced.

The heating temperature when the raw material mixture, preferably the amorphous raw material mixture is heated and sintered, is preferably 350°C or higher and lower than 600°C, more preferably 400°C to 575°C, and still more preferably 450°C to 575°C. Here, from the viewpoint of promoting a solid phase reaction, that is, crystallization, the heating temperature is preferably 350°C or higher, more preferably 400°C or higher, and still more preferably 450°C or higher. From the viewpoint of preventing thermal decomposition, the heating temperature is preferably lower than 600°C, and more preferably 575°C or lower.

A time for the heating and sintering is preferably from 1 hour to 100 hours, more preferably from 2 hours to 50 hours, and further preferably from 4 hours to 24 hours. Here, from the viewpoint of promoting the solid phase reaction, that is, the crystallization, the heating time is preferably 1 hour or more, more preferably 2 hours or more, and still more preferably 4 hours or more. From the viewpoint of preventing the thermal decomposition, the heating time is preferably 100 hours or less, more preferably 50 hours or less, and still more preferably 24 hours or less. Although the gas containing the S element is introduced, the length of the time may be adjusted in accordance with the concentration of the S element in the atmosphere during the heating treatment. That is, when the gas containing the S element is introduced as the mixed gas with the inert gas or the like, and when the amount of the inert gas is large and the concentration of the S element in the mixed gas is relatively low, the melting time may be set to be long. When the amount of the inert gas is small and the concentration of the S element in the mixed gas is relatively high, the melting time may be set to be short.

The sulfide solid electrolyte is obtained by step S2b.

### -Step S3a

When step S2a is performed as step S2, the sulfide solid electrolyte in the present embodiment is obtained by further including a step of cooling the melt and precipitating crystals as step S3a.

Cooling conditions in step S3a vary depending on the composition, a target crystallization rate, and the like.

A cooling rate is not particularly limited as long as a desired crystal is precipitated, but is preferably 5°C/min to 2000°C/min, more preferably 10°C/min to 1000°C/min, and still more preferably 30°C/min to 300°C/min. From the viewpoint of productivity, the cooling rate is preferably 5°C/min or more, more preferably 10°C/min or more, and still more preferably 30°C/min or more. From the viewpoint of increasing the crystallization rate, the cooling rate is preferably 2000°C/min or less, more preferably 1000°C/min or less, and still more preferably 300°C/min or less.

An atmosphere at the time of cooling is not particularly limited, but may be a gas atmosphere containing an S element as in the heating treatment or an inert atmosphere. When the melt is obtained in a vacuum sealed tube, the cooling may also be performed in a vacuum-sealed tube state.

The sulfide solid electrolyte is obtained by step S3a.

The sulfide solid electrolyte obtained in step S2b or step S3a may be further subjected to a stabilization treatment by heating, a pulverization treatment, or the like, if desired.

### <Sulfide Solid Electrolyte>

The sulfide solid electrolyte obtained by the above <Method for Producing Sulfide Solid Electrolyte> preferably contains an argyrodite crystal structure. Here, the argyrodite crystal structure is a crystal structure of a group of compounds derived from a mineral represented by a composition formula Ag₈GeS₆.

In a case of a sulfide solid electrolyte represented by Li₆PS₅Cl as the argyrodite crystal structure, and when Li₂S without S atom deficiency is used as the raw material, the following reaction proceeds.

5/2·Li₂S + 1/2·P₂S₅ + LiCl → Li₆PS₅Cl

On the other hand, when Li₂Sₓ (0.05 ≤ × ≤ 0.95) having the S atom deficiency is used as the raw material, as represented by 5/2·Li₂Sₓ + 1/2·P₂S₅ + LiCl → Li₆PS_{5-1/2x}Cl, an argyrodite sulfide solid electrolyte is produced in which an amount of x in Li₂Sₓ is deficient by half.

However, in the production method according to the present embodiment, by introducing the gas containing the S element, even when Li₂Sₓ (0.05 ≤ × ≤ 0.95) having S atom deficiency is used as the raw material, the argyrodite sulfide solid electrolyte represented by Li₆PS₅Cl or a sulfide solid electrolyte in which the deficiency of the S atom is prevented, which is close thereto, is obtained.

The argyrodite sulfide solid electrolyte more preferably contains, as the Ha element, at least one element selected from the group consisting of Cl, Br, and I, and still more preferably contains at least one of Cl and Br.

When a composition formula of the argyrodite sulfide solid electrolyte is represented by LiₐPS_{b}Ha_{c}, it is preferable to satisfy a relationship of 5 ≤a ≤ 7, 4 ≤b ≤ 6, and 1.3 ≤c ≤ 2. Such element ratios more preferably satisfy relationships of 5.1 < a < 6.3, 4 < b < 5.3, and 1.4 ≤ c ≤ 1.9, and still more preferably satisfy relationships of 5.2 < a < 6.2, 4.1 < b < 5.2, and 1.5 ≤ c ≤ 1.8.

That is, a is preferably 5 or more, more preferably more than 5.1, and still more preferably more than 5.2, and is preferably 7 or less, more preferably less than 6.3, and still more preferably less than 6.2. b is preferably 4 or more, more preferably more than 4, and still more preferably more than 4.1, and is preferably 6 or less, more preferably less than 5.3, and still more preferably less than 5.2. c is preferably 1.3 or more, more preferably 1.4 or more, and still more preferably 1.5 or more, and is preferably 2 or less, more preferably 1.9 or less, and still more preferably 1.8 or less.

A lattice constant of the argyrodite crystal structure is preferably 9.70 Å to 10.50 Å, more preferably 9.70 Å to 10.45 Å, still more preferably 9.70 Å to 10.40 Å, still more preferably 9.75 Å to 10.30 Å, and particularly preferably 9.75 Å to 10.20 Å. Here, from the viewpoint of maintaining high lithium-ion conductivity, the lattice constant is preferably 9.70 Å or more, and more preferably 9.75 Å or more. From the same viewpoint, the lattice constant is preferably 10.50 Å or less, more preferably 10.45 Å or less, still more preferably 10.40 Å or less, yet still more preferably 10.30 Å or less, and particularly preferably 10.20 Å or less.

In the sulfide solid electrolyte obtained by the production method according to the present embodiment, since the deficiency of the S atom is prevented, a decrease in lithium-ion conductivity is prevented. Specifically, the lithium-ion conductivity at 25°C is preferably 2 mS/cm or more, more preferably 5 mS/cm or more, still more preferably 8 mS/cm or more, and higher lithium-ion conductivity is more preferable. An upper limit of the lithium-ion conductivity is not particularly limited, and is generally 1 × 10⁻¹ S/cm or less.

The lithium-ion conductivity can be measured by an AC impedance method.

The sulfide solid electrolyte obtained by the production method according to the present embodiment is suitably used for an electrode mixture or a solid electrolyte layer used in a lithium ion secondary battery, and is particularly suitable for an all-solid-state lithium secondary battery.

That is, the electrode mixture is used in a lithium ion secondary battery, and contains the above-described solid electrolyte and an active material.

The solid electrolyte layer is used in a lithium ion secondary battery, and contains the above-described solid electrolyte.

The all-solid-state lithium secondary battery includes the solid electrolyte.

The electrode mixture, the solid electrolyte layer, and the all-solid-state lithium secondary battery may further contain another solid electrolyte. The other solid electrolyte is not particularly limited, and examples thereof include a solid electrolyte having an argyrodite crystal structure that is known in the related art, Li₃PS₄, Li₄P₂S₆, Li₂S, and LiHa.

As the active material contained in the electrode mixture, an active material known in the related art can be used.

For example, a positive electrode active material is not particularly limited as long as it can reversibly absorb and release lithium ions, desorb and insert (intercalate) lithium ions, or dope and dedope counter anions of the lithium ions. Specific examples thereof include lithium cobalt oxide, lithium nickel oxide, lithium manganese oxide, lithium nickel manganese oxide, composite metal oxides, and polyaniline olivine positive electrodes.

A negative electrode active material is not particularly limited as long as it can reversibly absorb and release lithium ions, desorb and insert (intercalate) lithium ions, or dope and dedope counter anions of the lithium ions. Examples of the negative electrode active material include metal lithium, carbon-based materials such as graphite, hard carbon, and soft carbon, metals capable of forming an alloy with lithium such as aluminum, silicon, and tin, amorphous oxides such as silicon oxide and tin oxide, and lithium titanate.

The solid electrolyte layer contains the solid electrolyte according to the present embodiment, and may further contain an additive such as a binder.

As the binder, materials known in the related art can be used, and examples thereof include butadiene rubber, acrylate butadiene rubber, styrene butadiene rubber, polyvinylidene fluoride, and polytetrafluoroethylene. A content of the binder in the solid electrolyte layer may also be within a range known in the related art.

The all-solid-state lithium secondary battery is not particularly limited as long as it contains the solid electrolyte according to the present embodiment, a positive electrode, and a negative electrode. The positive electrode or the negative electrode may be an electrode mixture containing the solid electrolyte according to the present embodiment.

An active material of the positive electrode may be the same as the positive electrode active material described in the electrode mixture, and the positive electrode may further contain a positive electrode current collector, a binder, a conductive auxiliary agent, and the like as necessary. As the positive electrode current collector, a metal thin plate such as aluminum, an alloy thereof, stainless steel, or the like can be used.

An active material of the negative electrode may be the same as the negative electrode active material described in the electrode mixture, and the negative electrode may further contain a negative electrode current collector, a binder, a conductive auxiliary agent, and the like as necessary. As the negative electrode current collector, a metal thin plate such as copper or aluminum can be used.

### EXAMPLES

Hereinafter, the present invention is described in detail with reference to Examples, but the present invention is not limited thereto.

Examples 1 to 4 are inventive examples, and Examples 5 and 6 are comparative examples.

### [Example 1]

Under a dry nitrogen gas atmosphere, a lithium sulfide powder (manufactured by Sigma, purity 99.98%), a phosphorus pentasulfide powder (manufactured by Sigma, purity 99%), a lithium chloride powder (manufactured by Sigma, purity 99.99%), and a lithium bromide powder (manufactured by Sigma, purity 99.995%) were weighed out so as to have a composition ratio of Li_{5.4}PS_{4.4}Cl_{0.8}Br_{0.8}, and mixed in a mortar, so that a raw material mixture was obtained. The lithium sulfide powder was measured using an X-ray powder diffraction (XRD) apparatus before the use, and a composition thereof was Li₂S_{0.33} instead of Li₂S, and it was found that the S atom was deficient after long-term storage.

The obtained raw material mixture was placed in a heat-resistant container under the same atmosphere and heated in an electric furnace at 750°C for 1 hour to obtain a completely melted melt. A gas containing an S element was introduced in this state, followed by holding for 1 hour, and then cooling to room temperature at 150°C/min to obtain a sulfide solid electrolyte.

The gas containing the S element was a mixed gas of a sulfur gas and a nitrogen gas, and a cumulative introduction amount of the S element with respect to the mass of the raw material mixture was 4 mass%.

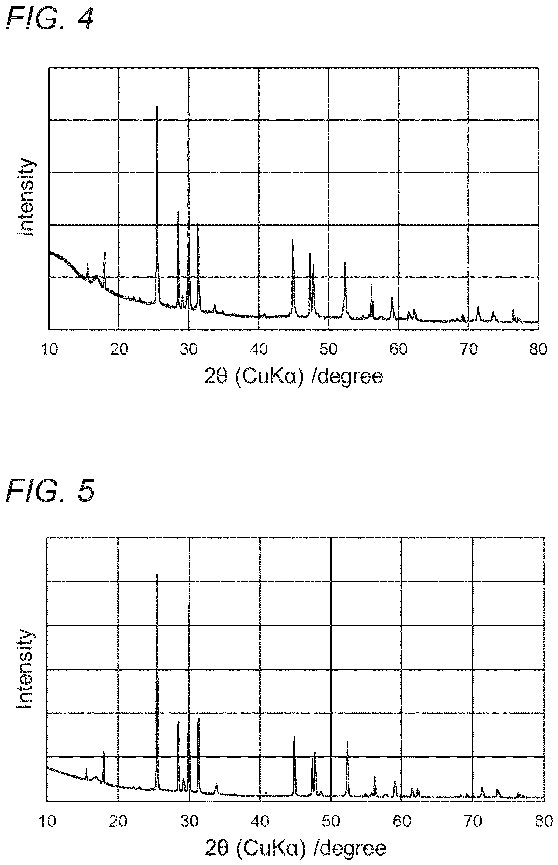

The XRD (powder X-ray diffraction) pattern of the obtained sulfide solid electrolyte is shown in FIG. 4, and measurement conditions of XRD are as follows.

Radiation Source: CuKα ray (λ = 1.5418 Å), tube bulb voltage: 45 kV, tube bulb current: 200 mA, scanning angle: 10° to 100°, scanning speed: 5°/min, number of steps: 0.01°/step.

From the XRD pattern, it was found that the obtained sulfide solid electrolyte had an argyrodite crystal structure.

### [Example 2]

A sulfide solid electrolyte having an argyrodite crystal structure was obtained in the same manner as in Example 1 except that the cumulative introduction amount of the S element with respect to the mass of the raw material mixture was 8 mass%.

The XRD pattern of the obtained sulfide solid electrolyte is shown in FIG. 5.

### [Example 3]

A sulfide solid electrolyte having an argyrodite crystal structure was obtained in the same manner as in Example 1 except that a lithium sulfide powder having a composition of Li₂S_{0.81} was used.

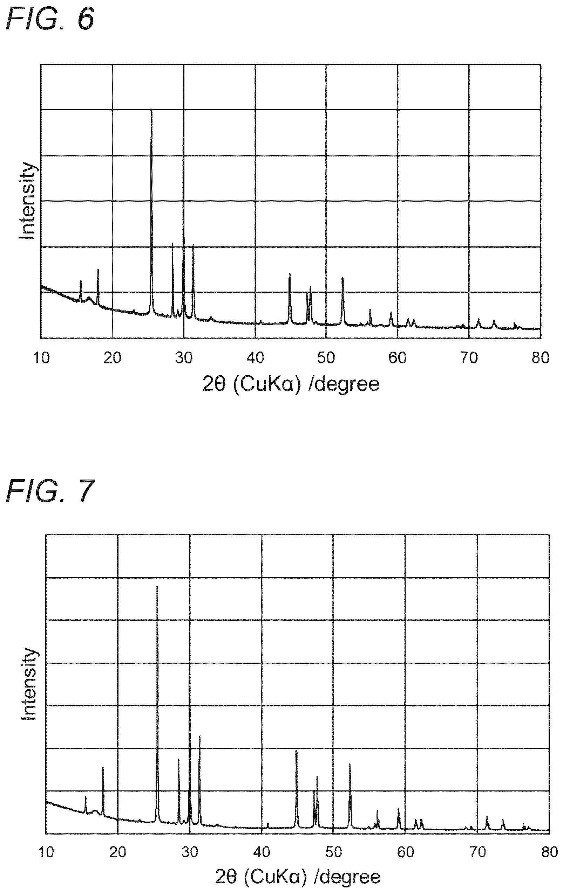

The XRD pattern of the obtained sulfide solid electrolyte is shown in FIG. 6.

### [Example 4]

A sulfide solid electrolyte having an argyrodite crystal structure was obtained in the same manner as in Example 1 except that a lithium sulfide powder having a composition of Li₂S_{0.86} was used.

The XRD pattern of the obtained sulfide solid electrolyte is shown in FIG. 7.

### [Example 5]

A sulfide solid electrolyte having an argyrodite crystal structure was obtained in the same manner as in Example 1 except that a nitrogen gas not containing an S element was used instead of the mixed gas which was the gas containing the S element.

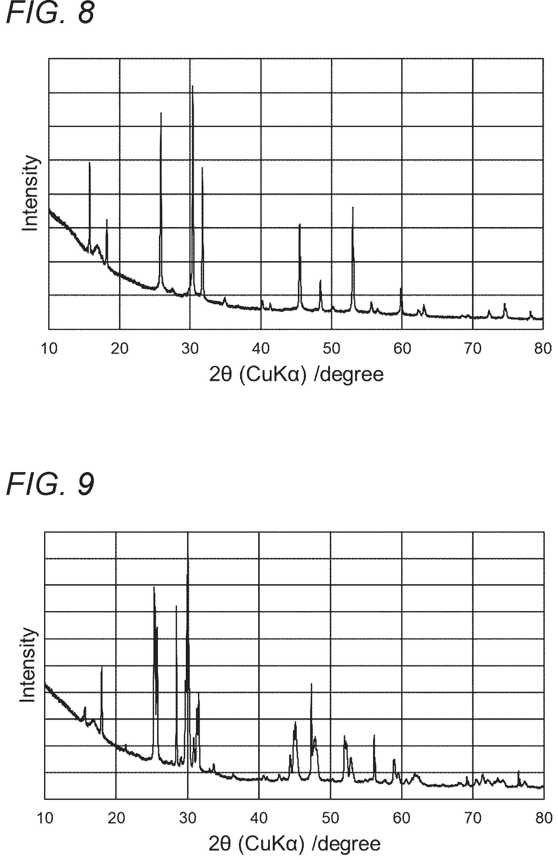

The XRD pattern of the obtained sulfide solid electrolyte is shown in FIG. 8.

### [Example 6]

A sulfide solid electrolyte having an argyrodite crystal structure was obtained in the same manner as in Example 3 except that a nitrogen gas not containing an S element was used instead of the mixed gas which was the gas containing the S element.

The XRD pattern of the obtained sulfide solid electrolyte is shown in FIG. 9.

Each of the sulfide solid electrolytes obtained in Examples 1 to 6 were pulverized in a mortar, coarse particles were removed by a mesh path having an opening of 100 µm, and 100 mg of an obtained substance was weighed and pressure-molded at 80 MPa with an area of 10 mm in diameter to prepare a measurement sample.

Next, the lithium-ion conductivity of the measurement sample was measured by using an AC impedance measuring device (potentiostat/galvanostat VSP, manufactured by Bio-Logic Sciences Instruments).

Measurement conditions were as follows: a measurement frequency of 100 Hz to 1 MHz, a measurement voltage of 100 mV, and a measurement temperature of 25°C.

Table 1 summarizes the composition of the lithium sulfide powder among the raw materials as "raw material Li₂Sₓ", the cumulative introduction amount of the S element in the gas containing the S element with respect to the mass of the raw material mixture as "cumulative introduction amount Y of S element (mass%)", the value represented by the relational expression (x² - 6.5x + 5.8) using the value of x in the composition (Li₂Sₓ) of the lithium sulfide powder as "relational expression (x² - 6.5x + 5.8)", and the lithium-ion conductivity at 25°C as "σ_{Li+} (mS/cm)".

**[Table 1]**

| | Raw material Li₂S, | Cumulative introduction amount Y of S element (mass%) | Relational expression (x² - 6.5x + 5.8) | σ_{Li+}(mS/cm) |
|---|---|---|---|---|
| Example 1 | Li₂S_{0.33} | 4 mass% | 3.76 | 5.4 mS/cm |
| Example 2 | Li₂S_{0.33} | 8 mass% | 3.76 | 9.1 mS/cm |
| Example 3 | Li₂S_{0.81} | 4 mass% | 1.19 | 8.3 mS/cm |
| Example 4 | Li₂S_{0.86} | 4 mass% | 0.95 | 9.6 mS/cm |
| Example 5 | Li₂S_{0.33} | - | 3.76 | 0.5 mS/cm |
| Example 6 | Li₂S_{0.81} | - | 1.19 | 1.5 mS/cm |

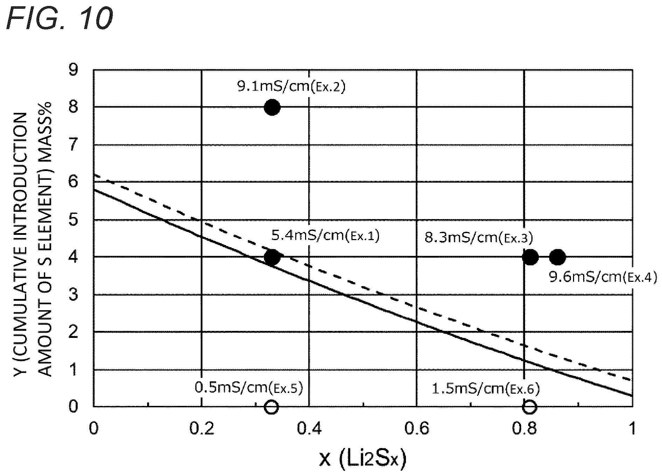

Based on the above results, for the cumulative introduction amount Y (mass%) of the S element in the gas containing the S element with respect to the mass of the raw material mixture and the value of x in Li₂Sₓ which is the raw material containing the S element, a quadratic function curve representing Y = x² - 6.5x + 5.8 is shown by a solid line and a quadratic function curve representing Y = x² - 6.5x + 6.2 is shown by a dotted line in FIG. 10. The values of x and Y for each example are plotted, and the lithium-ion conductivity for each example is also shown near the plot.

From the above results, it is found that, by satisfying the relationship of Y ≥ x² - 6.5x + 5.8, a sulfide solid electrolyte exhibiting high lithium-ion conductivity can be obtained in a short time even when low-quality lithium sulfide in which the S atom is deficient is used as the raw material. In particular, in view of the fact that the lithium-ion conductivity of the sulfide solid electrolyte obtained when Li₂S having no deficiency and a value of x of 1 is used as the raw material is 9 mS/cm to 9.5 mS/cm, it can be found how good the results of Examples 2 and 4 are.

When the XRD patterns in FIGS. 4 to 7 are compared with the XRD patterns in FIGS. 8 and 9, it is found that an intensity ratio between peak intensity of a (220) plane observed around 2θ = 25° and peak intensity of a (311) plane observed around 2θ = 30° is different. As shown in FIGS. 4 to 7, when the cumulative introduction amount Y of the S element in the gas containing the S element with respect to the mass of the raw material mixture satisfies the relationship of Y ≥ x² - 6.5x + 5.8, a relationship of the peak intensity of the (220) plane > the peak intensity of the (311) plane is satisfied. On the other hand, in FIGS. 8 and 9 that do not satisfy the relationship of Y ≥ x² - 6.5x + 5.8, the relationship of the peak intensity of the (220) plane < the peak intensity of the (311) plane is satisfied, and it is found that S is also deficient in the obtained sulfide solid electrolyte.

From this, it is considered that when the sulfide solid electrolyte is obtained using the low-quality sulfide raw material having the deficiency of S atom as in Examples 5 and 6, the lithium-ion conductivity is lowered as a result of the deficiency of S atom in the sulfide solid electrolyte.

On the other hand, in the sulfide solid electrolytes of Example 1 and Example 2, although the same sulfide raw material as that of Example 5 is used, high lithium-ion conductivity of 10 times or more is achieved in Example 1, and high lithium-ion conductivity of 18 times or more is achieved in Example 2. This is believed that by performing the heating treatment by introducing the gas containing the S element, even when the low-quality sulfide raw material having the deficiency of S atom is used, the deficiency of S atom in the obtained sulfide solid electrolyte can be prevented, and as a result, high lithium-ion conductivity can be achieved.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-178441) filed on November 7, 2022, the content of which is incorporated herein by reference.

## Claims

1. A method for producing a sulfide solid electrolyte, the method comprising:
mixing a raw material containing a Li element, a raw material containing a P element, and a raw material containing an S element to obtain a raw material mixture; and
heat-treating the raw material mixture,
wherein Li₂Sₓ (0.05 ≤ × ≤ 0.95) is used as the raw material containing the S element,
the heating treatment is performed while introducing a gas containing an S element, and
a cumulative introduction amount Y (mass%) of the S element in the gas containing the S element with respect to a mass of the raw material mixture satisfies a relationship of Y ≥ x² - 6.5x + 5.8 with respect to the x in the Li₂Sₓ.

2. The method for producing a sulfide solid electrolyte according to claim 1, further comprising:
obtaining a melt of the raw material mixture by the heating treatment; and
cooling the melt to precipitate a crystal.

3. The method for producing a sulfide solid electrolyte according to claim 1, wherein a crystal is precipitated by the heating treatment.

4. The method for producing a sulfide solid electrolyte according to claim 2 or 3,
wherein the raw material mixture further comprises a raw material containing a Ha element,
the Ha element is at least one element selected from the group consisting of F, Cl, Br, and I, and
the sulfide solid electrolyte has an argyrodite crystal structure.

5. The method for producing a sulfide solid electrolyte according to claim 4, wherein a lattice constant of the argyrodite crystal structure is 9.70 Å to 10.50 Å.

6. The method for producing a sulfide solid electrolyte according to claim 2 or 3, wherein the x in the Li₂Sₓ is 0.05 ≤ × ≤ 0.90.

7. The method for producing a sulfide solid electrolyte according to claim 2 or 3, wherein the gas containing the S element comprises a sulfur gas.

8. The method for producing a sulfide solid electrolyte according to claim 2 or 3, wherein the cumulative introduction amount Y of the S element in the gas containing the S element is 2 mass% or more.

9. The method for producing a sulfide solid electrolyte according to claim 2 or 3, wherein the sulfide solid electrolyte has lithium-ion conductivity of 2 mS/cm or more.
